# FASCICULE DE BREVET EUROPEEN

(11) **EP 0 521 187 B1**
(45) Date de publication et mention de la délivrance du brevet: **02.11.1995**
(21) Numéro de dépôt: 91111210.0
(22) Date de dépôt: 05.07.1991
(51) Int. Cl.: A47J 31/40

(54) **Dispositif d'extraction de cartouches adaptable à toute machine espresso**
Gerät zum Extrahieren von Kartuschen, brauchbar für jede Espressomaschine
Device for extracting cartridges, which can be adapted to every espresso-machine

(43) Date de publication de la demande: 07.01.1993
(73) Titulaire: SOCIETE DES PRODUITS NESTLE S.A., 1800 Vevey (CH)
(72) Inventeur: Fond, Olivier, CH-1400 Yverdon (CH)

(56) Documents cités:
- EP-A- 0 006 175
- CH-A- 458 099
- CH-A- 605 293
- DE-U- 7 430 109
- DE-U- 8 908 315
- FR-A- 1 566 089
- US-A- 2 451 195
- US-A- 2 899 886

## Description

L'invention concerne un dispositif d'extraction de cartouches adaptable à toute machine espresso.

L'usage ordinaire des machines à café de type espresso correspond à l'extraction de café moulu qui a été dosé et disposeé préalablement dans un filtre métallique maintenu dans une cuillère.

La partie supérieure des machines à café de type espresso est composée d'une grille de répartition d'eau permettant l'arrosage du café, d'une bague de serrage pour la fixation de la cuillère et d'un joint de caoutchouc assurant l'étanchéité et une bonne extraction en forçant le passage de l'eau à travers le lit de café.

Néanmoins, l'utilisation est fastidieuse, source de souillures et de frustration car la qualité de la boisson obtenue n'est pas toujours à la hauteur des espérances. Il est en effet, difficile de doser correctement le café et de trouver sa bonne mouture.

L'emploi de capsules de café par exemple celle faisant l'objet du brevet CH 605 293 est une bonne alternative car les manipulations sont simplifiées, la qualité du café est meilleure et constante et les risques de salissures sont réduits. Néanmoins, l'utilisation de capsules de café exige une parfaite adéquation entre la capsule et le dispositif d'extraction, essentiellement pour des questions d'étanchéité et afin de forcer le passage de l'eau à travers le lit de café.

Cette adaptation peut être prévue dès la construction de la machine mais, dans ce cas, la machine ne permet en général d'employer que des capsules.

US-A-2 451 195 décrit un dispositif fixe, pour extraire le faissau des cartouches et pas un dispositif comprénant un porte-cartouche adaptable de manière amovible à une machine à café expresso.

Le but de la présente invention est l'adaptation possible, à moindre frais, sur la plupart des machines à café espresso ordinaires et d'une manière non exclusive, c'est à-dire qu'elle permet d'alterner selon convenance l'usage de capsules et l'usage ordinaire du filtre avec le café moulu.

Il est bien entendu que l'extraction de type espresso est connue en tant que telle et l'invention concerne le dispositif d'extraction pour les cartouches.

Dans la présente description, si on parle de cuillère pour la machine espresso normale, on parlera de support de porte-cartouche pour désigner le même objet s'agissant d'extraction de cartouches (ou capsules).

L'invention est contenue dans le revendication principal

On remplace dans le dispositif selon l'invention la grille d'origine par une grille de répartition d'eau pourvue en plus d'éléments saillants qui assurent la déchirure de la paroi supérieure de la cartouche permettant ainsi une bonne répartition de l'eau.

Comme on le verra en référence avec les figures, la grille de répartition d'eau peut être simple c'est-à-dire maintenue par une vis creuse ou présenter un rebord recouvrant en partie la face de sortie d'eau. Dans ce dernier cas, il faut prévoir un joint supplémentaire qui devra être installé entre ladite nouvelle grille et le bloc d'extraction. Dans ces deux formes de réalisation, on peut envisager soit un support de porte-cartouche spécifique, soit le support de porte-cartouche d'origine de la machine. Dans une première forme de réalisation, on peut prévoir un support de porte-cartouche spécifique, c'est-à-dire non d'origine pour ce type de machine à café. En outre, il faut disposer aussi d'un porte-cartouche spécifique de la cartouche à extraire. Dans ce cas, le support du porte-cartouche peut comporter une bague de retenue pour le maintien du porte-cartouche.

Dans une seconde forme de réalisation, on dispose de la cuillère (ou support de porte-cartouche) vendue avec la machine considérée. Dans ce cas, le support du porte-cartouche se prolonge contre le joint d'étanchéité de la machine de même que le porte-cartouche lui-même. On réalise ainsi une double sécurité d'étanchéité; l'une sur le joint solidaire du porte-cartouche l'autre sur le joint de la machine.

La cartouche utilisée pour la mise en oeuvre du procédé selon l'invention peut être choisie parmi celles faisant l'objet des demandes de brevet européen déposées par la demanderesse, le même jour que la présente demande, sous les titres "Emballage rigide et procédé de fabrication", "Emballage souple avec élément rigidifiant et procédé de fabrication" et "Emballage souple ouvert et procédé de fabrication". On peut aussi utiliser les capsules faisant l'objet des demandes de brevet EP No. 90114404.8 et 90114405.5.

Elle a un diamètre compris entre 2.5 et 6 cm et une épaisseur de lit de café comprise entre 10 et 25 mm.

Si l'on parle de capsules fermées dont la qualité réside dans le fait qu'elles s'ouvrent automatiquement au moment de l'extraction, simplifiant à l'extrême les manipulations et assurant la qualité ultime par protection du café contre l'oxygène jusqu'au dernier instant avant l'extraction, il faut mettre en place le dispositif qui assurera cette ouverture. L'ouverture doit être double; sur la face supérieure afin de permettre l'introduction d'eau et sur la face inférieure pour assurer l'évacuation du café extrait.

Pour ouvrir la face supérieure de la capsule, il faut changer la grille de répartition d'eau placée sur la machine. Cette grille est fixée à la machine par l'intermédiaire d'une vis, creuse et percée de quelques orifices latéraux afin de laisser passer l'eau depuis le canal de la tête d'extraction. Cette grille peut être remplacée par une autre grille de même forme et caractéristique mais pourvue, sur sa face inférieure, de quelques pointes, lames ou croix saillantes qui déchireront la paroi supérieure de la capsule. Ces éléments saillants peuvent être verticaux ou légèrement orientés de manière à augmenter la surface des déchirures opérées sur les capsules. Ces déchirures seront, de plus, accentuées par la rotation exercée par le support du porte-cartouche lors du serrage pour obtenir l'étanchéité.

Dans une seconde forme de réalisation, on laisse la grille de répartition d'eau et on lui superpose un système porteur d'éléments saillants par exemple en forme de croix.

L'eau passera sans problème dans la capsule puisque, sous l'effet de la pression d'eau, la membrane supérieure, de nature souple, pourra fléchir légèrement et libérer ainsi les ouvertures réalisées par les éléments saillants.

Ces éléments saillants sont constitués de pointes tronconiques, d'une hauteur de 2 à 7 mm, et d'un diamètre moyen de 2 à 5 mm, ou de petites lames ou croix, d'une hauteur de 2 à 7 mm, d'une section de 1 à 3 mm, légèrement taillées en crête.

Ces éléments, au nombre de 3 à 10, sont répartis sur la face inférieure de la grille de répartition d'eau dans la zone correspondant au diamètre intérieur supérieur du corps de la cartouche.

L'ouverture de la face inférieure peut être réalisée à l'aide du procédé et une partie du dispositif, objet de la demande de brevet européen No. 91107462.3. Il s'agit, en effet, d'adapter le dispositif constitué d'ailettes saillantes placées sur la grille d'écoulement du porte-cartouche. On peut aussi utiliser les dispositifs faisant l'objet des demandes de brevet européen No. 90114401.4 et 90114403.0 c'est-à-dire avec un porte-cartouche comportant sur sa partie inférieure un pointeau central avec éventuellement des ailettes radiales.

L' invention concerne aussi le porte-cartouche prévu pour être logé dans le support de porte-cartouche, ce porte-cartouche ayant une forme intérieure tronconique adaptée à la forme extérieure de la cartouche à extraire et comportant sur son rebord extérieur un joint d'étanchéité. Cette forme convient dans le cas d'un support de porte-cartouche spécifique, c'est-à-dire non d'origine pour la machine. Si on utilise le support de porte-cartouche d'origine de la machine, le rebord extérieur du porte-cartouche se prolonge pour épouser le bord supérieur dudit support.

La suite de la description est faite en référence aux dessins sur lesquels
Fig. 1 est une représentation schématique de la tête d'extraction et de la bague de serrage d'une machine espresso standard,
Fig. 2 est une représentation schématique de la tête d'extraction et de la bague de serrage d'une machine espresso standard selon une autre configuration,
Fig. 3 est une représentation de la grille modifiée pour le dispositif selon l'invention,
Fig. 4 est une représentation de la tête d'extraction modifiée selon l'invention,
Fig. 5 est une représentation de la tête d'extraction modifiée selon une autre forme de réalisation,
Fig. 6 est une vue de dessous des éléments saillants de la Fig. 5,
Fig. 7 est une représentation schématique de la cartouche à extraire et du dispositif selon l'invention,
Fig. 8 est une représentation schématique de la cartouche à extraire et du dispositif selon l'invention dans un autre mode de réalisation.

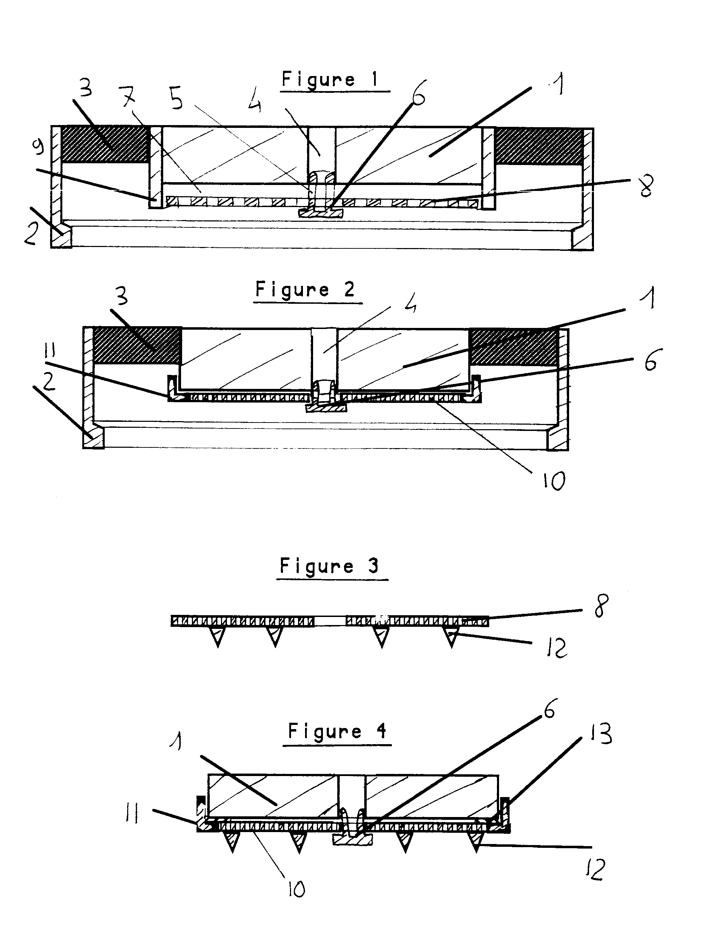

La Fig. 1 représente une tête d'extraction (1) classique de machine type espresso. Elle comporte une bague de serrage (2) de la cuillère (non représentée). Le joint (3) assure l'étanchéité lors de l'extraction. L'eau arrive par le canal (4) et passe par les orifices (5) de la vis creuse (6) pour se répandre dans la chambre (7). Elle passe ensuite à travers la grille de répartition d'eau (8) pour s'écouler sous forme de douche sur le lit de café non représenté. La grille (8) est engagée dans un logement cylindrique (9) de la tête d'extraction.

La Fig. 2 montre une seconde forme de réalisation de la tête d'extraction. Les mêmes éléments ont été affectés des mêmes no. de référence que la Fig. 1. Dans ce cas la grille (10) présente un rebord métallique (11).

Selon la Fig. 3, on modifie la grille (8) en lui adjoignant par soudage des éléments saillants (12) pour permettre l'ouverture de la face supérieure des cartouches à extraire. On pose ensuite cette grille modifiée sur la tête d'extraction selon la Fig. 1. Selon la Fig. 4, on modifie la tête d'extraction selon la Fig. 2. On dispose au niveau du rebord métallique (11) un joint (13) permettant d'assurer l'étanchéité du système et on soude sur la grille (10) les éléments saillants (12).

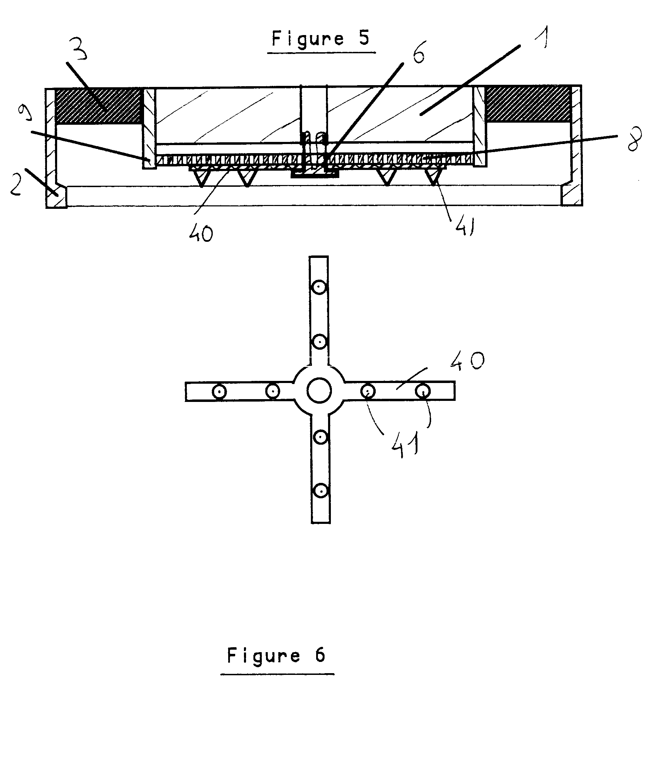

Selon la Fig. 5, on modifie la tête d'extraction selon la Fig. 1. On fixe à l'aide de la vis creuse (6) un système (40) porteur d'éléments saillants (41). L'avantage de cette solution est qu'elle permet un retour facile à l'état antérieur en enlevant le système (40).

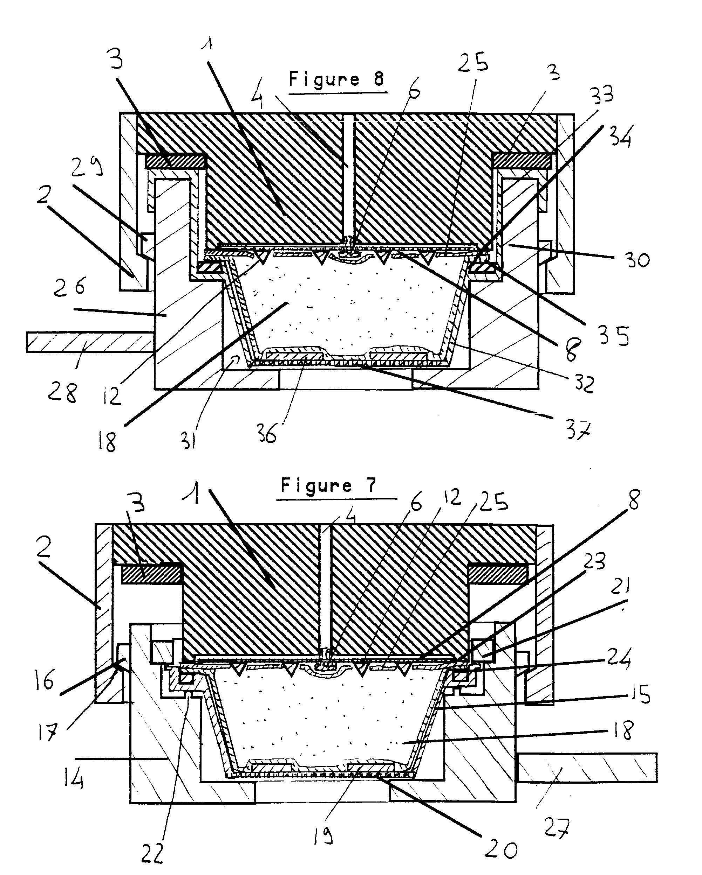

Les Fig. 7 et 8 représentent le dispositif selon l'invention avec une tête d'extraction selon la Fig. 1.

Dans le dispositif selon la Fig. 7, on dispose d'une machine espresso classique et on fournit avec la machine un support de porte-cartouche (14) et un porte-cartouche (15). Le support (14) comporte des pattes de serrage (16) s'engageant sur les rampes de serrage (17) de la bague de serrage (2).

Le porte-cartouche (15) comporte une bordure supérieure (23) avec joint (24) permettant de maintenir la cartouche (18) à extraire et garantissant une parfaite étanchéité lors de l'extraction. Le porte-cartouche (15) comporte en outre sur le bas des éléments saillants (19) et une grille d'écoulement (20) faisant l'objet de la demande de brevet EP No. 91107462.3. La bague de retenue (21) du support (14) permet de, maintenir le porte-cartouche dans le support.

Le fonctionnement du dispositif est le suivant: on place la cartouche (18) dans le porte-cartouche (15), lui-même disposé dans le support de porte-cartouche (14). A noter que le porte-cartouche (15) peut tourner dans le support (14) sur un anneau d'appui (22). On engage le support (14) avec ses pattes de verrouillage (16) dans la bague de serrage (2). Lorsqu'on engage le support, la grille (8) et ses éléments saillants (12) s'enfoncent dans la face supérieure (25) de la cartouche à extraire. Lors de la mise en marche de l'appareil, l'eau arrive par le canal (4) et se répartit uniformément sur la grille (8), la traverse et pénètre dans la capsule par les orifices opérés par les éléments saillants (12). On a une montée en pression dans la cartouche et la face inférieure de ladite cartouche appuie sur les éléments saillants (19) jusqu'à atteindre sa tension de rupture. Le café s'écoule alors à travers la grille (20) et est récupéré dans un récipient non représenté. Le joint (24) serre bien le pourtour de la face supérieure (25) de la cartouche pour garantir une bonne étanchéité du système lors de la montée en pression. En effet, cette pression peut atteindre des valeurs pouvant aller jusqu'à 15 bar.

La Fig. 8 représente le dispositif selon l'invention dans un second mode de réalisation. Les éléments identiques de la Fig. 7 ont été affectés du même no. de référence. La différence avec le dispositif selon la Fig. 7 réside dans le fait qu'on utilise ici le support du porte-cartouche (26) d'origine de cette machine espresso classique comportant une poignée (28) et une bordure cylindrique supérieure (30) permettant au rebord supérieur du porte-cartouche de s'appuyer contre le joint (3) de la tête d'extraction (1). Les pattes de serrage (29) du support (26) s'engagent dans la bague de serrage (2) de la machine. Le porte-cartouche (31) est différent de celui de la Fig. 7. Il comporte un logement (32) pour la cartouche (18) à extraire et une partie cylindrique supérieure (33) qui s'engage entre la bordure cylindrique supérieure (30) du support de porte-cartouche et le joint (3) de la tête d'extraction. Le porte-cartouche comporte une bordure intermédiaire (34) avec joint (35) garantissant l'étanchéité principale lors de l'extraction de la cartouche (18), le joint (3) assurant en plus une étanchéité secondaire.

Le fonctionnement du dispositif est le même que celui de la Fig. 7, l'ouverture de la partie inférieure de la cartouche (18) étant assurée par des éléments saillants (36) solidaires du bas du porte-cartouche (31) lors de la montée en pression dans la cartouche, lorsque ladite partie inférieure atteint son point de rupture. Le café s'écoule alors à travers la grille (37).

## Revendications

1. Dispositif d'extraction de cartouches fermées comprenant une tête d'extraction comportant une grille de répartition d'eau (8) qui doit être fixée à une machine à café espresso classique par l'intermédiaire d'une vis (6), présentant sur sa face inférieure des éléments saillants (12), un support de porte-cartouche (14) prévu pour s'engager sur les rampes de serrage de la bague de serrage de la machine à café et un porte-cartouche (15) amovible logé dans ledit support et ayant une forme intérieure tronconique adaptée à la forme extérieure de la cartouche à extraire, le porte-cartouche (15) comportant sur son rebord supérieur un joint d'étanchéité (24, 35) coopérant avec le pourtour de la grille de répartition d'eau pour assurer l'étanchéité lors de l'extraction de la cartouche et sur sa partie inférieure des éléments en relief et en creux (36) sur une grille d'écoulement (37) ou un pointeau central avec éventuellement des ailettes radiales.

2. Dispositif selon la revendication 1 caractérisé en ce que le support de porte-cartouche comporte une bague de retenue (21) pour le maintien du porte-cartouche.

3. Dispositif selon la revendication 1 où l'on utilise comme support de porte-cartouche (26) la cuillère de la machine à café, le porte-cartouche (31) se prolongeant ver le haut contre le joint (3).

## Claims

1. A device for the extraction of sealed cartridges comprising an extraction head with a water distributing grill (8) which is designed to be fixed to a conventional espresso coffee machine by a screw (6) and which has projecting elements (12) on its lower face, a cartridge holder support (14) designed to engage on the retaining ramps of the retaining collar of the coffee machine and a cartridge holder (15) which is detachably arranged in the support and which has an inner frustoconical shape adapted to the outer shape of the cartridge to be extracted, comprising on its upper rim a seal (24,35) co-operating with the periphery of the water distributing grill to establish fluid tightness during extraction of the cartridge and, on its lower part, relief and recessed elements (36) on a flow grill (37) or a central needle optionally with radial fins.

2. A device as claimed in claim 1, characterized in that the cartridge holder support comprises a retaining collar (21) for keeping the cartridge holder in place.

3. A device as claimed in claim 1 where the ladle of the coffee machine is used as the cartridge holder support (26), the cartridge holder (31) extending upwards against the seal (3).

## Patentansprüche

1. Vorrichtung zum Extrahieren von geschlossenen Kartuschen, mit einem Extraktionskopf, der ein Gitter (8) zum Verteilen von Wasser enthält, das mittels einer Schraube (6) an einer klassischen Espresso-Kaffeemaschine befestigt sein soll, und das auf seiner Unterseite vorstehende Elemente (12) aufweist, einem Kartuschenhalterträger (14), der vorgesehen ist, um auf den Spannrampen des Spannrings der Kaffeemaschine in Eingriff zu kommen, und einen Kartuschenhalter (15), der lösbar in dem Träger angeordnet ist und eine kegelstumpfartige innere Form hat, die an die äußere Form der zu extrahierenden Kartusche angepaßt ist, wobei der Kartuschenhalter (15) auf seinem oberen Rand eine Dichtung (24, 35) aufweist, die mit dem äußeren Umfang des Gitters zum Verteilen von Wasser zusammenwirkt, um die Dichtheit beim Extrahieren der Kartusche zu gewährleisten, und auf seinem unteren Teil Erhöhungen und Vertiefungen (36) auf einem Ablaufgitter (37) oder einen zentralen Stift eventuell mit radialen Stegen aufweist.

2. Vorrichtung nach Anspruch 1, dadurch gekennzeichnet, daß der Kartuschenhalterträger einen Haltering (21) zum Halten des Kartuschenhalters enthält.

3. Vorrichtung nach Anspruch 1, bei der als Kartuschenträgerhalter (26) die Kelle der Kaffeemaschine verwendet wird, wobei sich der Kartuschenhalter (31) nach oben zu der Dichtung (3) hin erstreckt.
